# EUROPEAN PATENT SPECIFICATION

(11) **EP 2 006 981 B1**
(45) Date of publication and mention of the grant of the patent: **27.07.2016**
(21) Application number: 08010096.9
(22) Date of filing: 03.06.2008
(51) Int. Cl.: H02K 9/06, A63H 23/04, A63H 27/00, H02K 5/22, A63H 29/22, H02K 1/27

(54) **Electric motor with a rotary casing for industrial and model-making applications**
Elektrischer Motor mit rotierendem Gehäuse für gewerbliche Anwendungen und im Modellbau
Moteur électrique doté d'un carter rotatif pour des applications industrielles et d'élaboration de modèles

(30) Priority: 19.06.2007 CZ 20070415
(43) Date of publication of application: 24.12.2008
(73) Proprietor: Rozehnal, Dalibor, 62100 Brno (CZ); Überall, Roman, 68801 Uhersky Brod (CZ)
(72) Inventor: Rozehnal, Dalibor, 62100 Brno (CZ); Überall, Roman, 68801 Uhersky Brod (CZ)
(74) Representative: Kreizlova, Dana

(56) References cited:
- EP-A1- 0 724 322
- DE-U1-202005 020 124
- JP-A- 5 344 682
- JP-A- 2002 247 820

## Description

### Field of Invention

The invention concerns an internal cooling system which is a part of an electric motor with a rotary casing for industrial and model-making applications.

### Background Art

In the current design of electric motors with a rotary casing, cooling is based on apertures of cylindrical and other shapes on the front face of the motor. Since electric motors with a rotary casing are used in combination with aeromodelling propellers to drive model airplanes, their cooling is based on ram pressure of the air flow passing through the apertures in the front face of the motor. This design allows for cooling of the coiling and its magnets in the frontal part of the motor, which however requires the classic "pull" arrangement of the driving mechanism (electric motor plus the propeller). The cooling efficiency is insufficient in motors with the inverse, "push" arrangement of the driving mechanism and the current design of internal cooling is entirely inadequate in industrial applications, where electric motors with rotary casings with no propellers and no ram pressure of the fluid are used. Unless external cooling is used, operating these mechanisms requires sticking to lower engine performances.

To improve the efficacy of internal cooling in rotary-casing electric motors, the design integrating a cooling fan with a radial moving wheel whose rotation is to ensure more intensive whirling motion of the fluid flowing into the front part of the motor is used. Although this construction design does bring a certain cooling effect, it is at the cost of increased weight, increased price of the mechanism, and increased complexity of design which entail a corresponding negative impact on motor reliability and service life, and, last but not least, the need to increase the motor's output power to drive the integrated cooling fan.

In addition, the current design of electric motors with a rotary casing does not allow for sufficient cooling of the coiling on the back side of the electric motor and where the magnets are fitted.

JP 2002 247 820 A discloses an electric motor for industrial and model-making applications having a rotary casing comprising front face, magnetic ring and rear face, wherein there is a system of output cooling ducts in its rotary casing, and wherein this electric motor also contains at least one cooling fluid input in its middle load-bearing part and that this middle load-bearing part contains a cavity and a cooling fluid passage leading into the intermediate space between the parts of the rotary casing and the static parts of the electric motor, and the rotary casing being fitted on the middle load-bearing part using at least one bearing so that the casing can rotate.

### Nature of Invention

The invention is defined in claims 1-7.

The above-described drawbacks of cooling in electric motors with a rotary casing used in industrial and model-making applications can largely be removed by using the invention design. The basic idea of the invention is to equip the rotary casing of the electric motor, namely the magnet ring between the magnets and the motor's rear face and the motor's front face, with a system of output cooling ducts while equipping the electric motor with at least one cooling fluid input.

It is characteristic of one of the design variants of the electric motor that the middle, load-bearing part of the electric motor (the static part) has at least one cooling liquid input; from there the fluid passes into an adjacent cavity and an intermediate space between the rotary casing and the static components of the electric motor; the rotary casing is fitted using an at least one bearing onto the middle load-bearing part. The cavity can be either continuous or split with a wall.

It is also advisable to equip the block of stator stampings with a system of through ducts interconnected to the ducts in the middle load-bearing part.

Each basic or derived variant of the design outlined above can be supplemented with some of the design features providing additional advantages: for instance, the electric motor may be equipped with a rear grip and/or a front grip; the front face (of the rotary casing) can be fitted with a propeller carrier; the input (of the static part) can be fitted with a cooling pressure fluid source.

The main strength of the electric motor with a rotary casing concerned which is the subject of the invention consists in the fact that there is an integrated system of shaped ducts on the inside of the magnet circle creating negative pressure inside the electric motor during its operation, and thus causing spontaneous continuous inflow and outflow of the cooling liquid - mostly air - inside the electric motor. In this way intensive cooling of the front part of the coiling, the rear part of the coiling, the band of stator stampings as well as the magnets themselves is guaranteed. This cooling of the rotary-casing electric motor which is the subject of the invention reduces the service temperature inside the electric motor considerably - on the coiling, on the stator stampings, on the magnets and the bearings. Despite all this the electric motor consists of standard parts only and basically no additional equipment is needed to achieve the cooling effect. The design which is the subject of the invention gives the electric motor a greater output power while temperature limits of its individual parts are preserved.

The input of the cooling liquid - mostly air - into the electric motor is situated - depending on where pressure gradient is needed - in the middle parts of the electric motor and/or in the adjacent components of the rotary casing. It consists of an aperture or a system of apertures and an adjacent duct or system of ducts leading to output ducts.

It is also an advantage that besides spontaneous air cooling, the electromotor which is the subject of the invention can be connected to an external source of pressure fluid (most often air again) to increase the intensity of heat transfer - i.e. the thermal flow between the internal static parts of the electric motor, the internal parts of the rotary causing, and the cooling fluid. The following parts are cooled: stator stampings under the colling, the front and rear sides of the coiling, and the inward-oriented sides of the magnets. The intensity of the flow of the cooling liquid through the inside of the rotary-casing electric motor depends on friction losses in its ducts and the rotational speed. Having connected the input of air into the electric motor to the external source of cooling fluid, forced flow of the cooling medium can be used to control heat removal so as to make it consistent with the requirements on the operation of the mechanism.

Application-wise, the principal advantage of the rotary-casing electric motor as specified by the invention is the fact that the cooling allows for sufficient removal of heat from the inside of the motor, both in model-making applications involving propellers in pull and push design and in other, industrial applications involving e.g. a belt pulley rather than a propeller or connected directly to the component to be driven.

The cooling of the rotary-casing electric motor as specified by the invention allows for achieving positive or negative pressure in front-end and rear-end systems when the motor is in operation. This can be used to control the intensity of cooling by cooling fluid flow in these mechanisms actively with a view to increasing the intensity of heat transfer (the cooling effect) between the source of heat and the circulating cooling fluid.

The above-described-design of internal cooling as specified by the invention can be applied in rotary-casing electric motors operating in the inverse (generator) mode, too.

### List of figures in the drawings

Examples of specific design variants of the rotary-casing electric motor as specified by the invention are shown in the enclosed drawings:
- Fig. 1: Electric motor with a cavity in the middle load-bearing part - centre section;
- Fig. 2: Electric motor with a cavity and a wall in the middle load-bearing part - centre section;
- Fig. 3: Electric motor with a solid middle load-bearing part and internal cooling of stator stampings;
- Fig. 4: Electric motor with cooling fluid inputs leading into the intermediate space between static and rotary parts - centre section (Not an embodiment of the claimed invention)

### Exemplary Realization of Invention

### Example 1

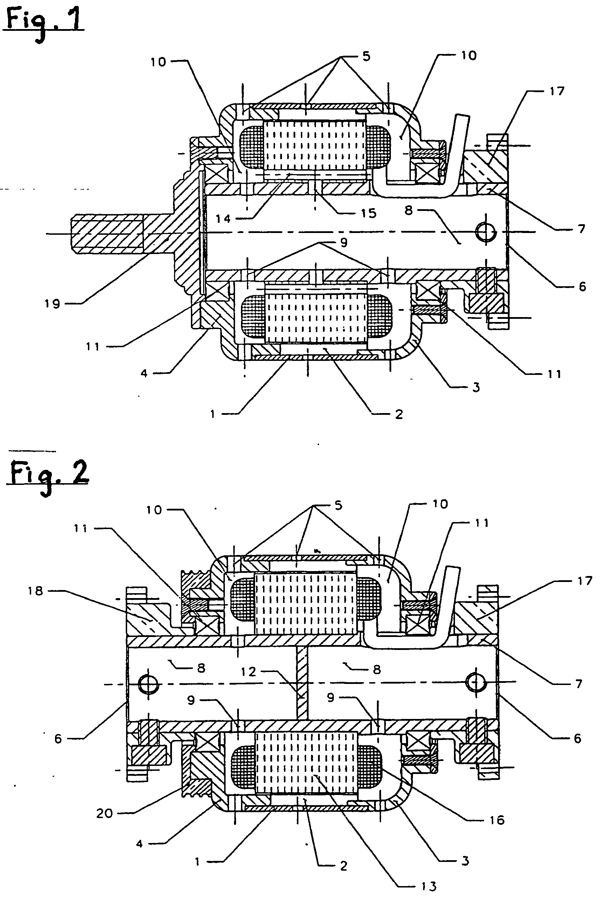

Fig. 1 shows the electric motor with output cooling ducts on the individual parts of the rotary casing - on the magnet ring 1 containing magnets 2, on the rear face 3 and the front face 4 of the motor - and the cooling fluid (air in this case) input 6 in the middle load-bearing part 7 of the electric motor. The middle load-bearing part 7 is also fitted with a cavity 8 and cooling fluid passages 9 leading into the intermediate space 10 between the static parts of the motor and components of the rotary casing mounted with the help of bearings 11 on the middle load-bearing part of the motor 7 so that the casing can rotate. The cavity 8 is straight-through and there is a rear grip 17 mounted on the middle load-bearing part 7. There is an propeller carrier 19 mounted on the front side of the front face 4 of the rotary casing.

When the electric motor is started and the rotary casing starts to rotate, negative pressure starts to develop in the output channels 5 in the vicinity of the ring 1 of magnets 2, the rear face 3 and the front face 4 of the motor, drawing in air from the intermediate space 10 and the interconnected passages 9 and then also from the cavity 8 and the input of the cooling fluid 6. The air is simultaneously drawn in from the through ducts 14 and the connected ducts 15 and later on from the cavity 8 and the cooling fluid input 6. This causes a continuous flow of air through the internal parts of the electric motor from the middle load-bearing part 7, which is static, to the individual static components inside the electric motor and the individual parts of the rotary casing, spontaneously heated during the motor operation - which is now simultaneously cooled thanks to the induced flow of cooling air. This happens without any need to connect any accessory cooling system which would mean additional weight, costs, and energy consumption. This explains the high effectiveness of the cooling system which is the subject of the invention. The above-described design variant makes this electric motor suitable especially for aircraft models with an inverse (push) design of the driving mechanism and for aircraft models where the model is for instance to preserve the-scale model look - placed so that using ram pressure of the flowing air is impossible or insufficient.

### Example 2

Fig. 2 shows the electric motor with output cooling ducts 5 on the individual parts of the rotary casing - on the magnet ring 1 containing magnets 2, on the rear face 3 and the front face 4 of the motor - and cooling fluid inputs 6 in the middle load-bearing part 7 of the electric motor. The middle load-bearing part 7 is fitted with static stator stampings 13 with coiling 16. The middle load-bearing part is also fitted with a cavity 8 and cooling fluid passages 9 leading into the intermediate space 10 between the static parts of the motor and components of the rotary casing mounted using bearings 11 on the middle load-bearing part of the motor 7. The cavity 8 is split by an internal wall 12 and a rear grip 17 and a front grip 18 are mounted on the middle load-bearing part 7. There is a belt pulley 20 mounted on the front side of the front face 4 of the rotary casing.

When the electric motor is started and the rotary casing starts to rotate, negative pressure starts to develop in the output channels 5 in the vicinity of the ring 1 of magnets 2, the rear face 3 and the front face 4 of the motor, drawing in air from the intermediate space 10 and the interconnected passages 9 and then also from the cavity 8 and the cooling fluid input 6. This causes a continuous flow of the cooling fluid through the inside of the electric motor from the middle load-bearing part 7, which is static, to the individual static components inside the electric motor, i.e. the stator stampings 13 and the coiling 16 and the individual moving components of the rotary casing, spontaneously heated during the motor operation - which are now simultaneously cooled thanks to the induced flow of the cooling fluid. This again happens without any need to connect any accessory cooling system, using only modified components which are already part of the electric motor, i.e. with high effectiveness and all kinds of benefits. Electric motors with this system of internal cooling can be used in industrial applications in both the motor and the generator mode where taking advantage of the ram pressure of the flowing air is impossible and the electric motor has to be fixed extremely steadily. This is achieved using the rear grip 17 and the front grip 18. The electric motor can be connected to an external source of cooling fluid and the forced flow of the cooling fluid through its inside can be used to control heat removal so that the service requirements of the motor are satisfied.

### Example 3

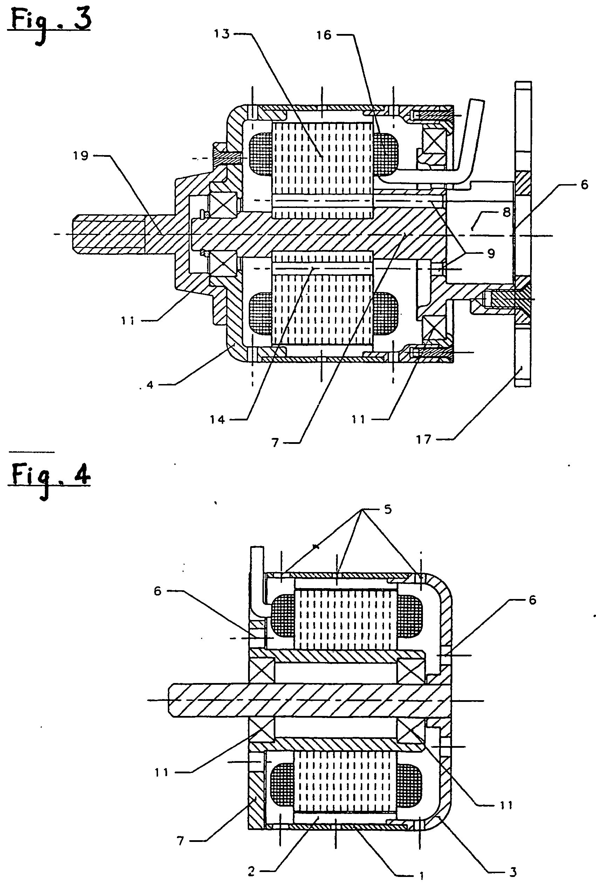

Fig. 3 shows the electric motor with a compact middle load-bearing part 7 and an input 6 for the cooling fluid - air - in the medium load-bearing part 7 of the electric motor. There are cavity 8 and cooling fluid passages 9 in the middle load-bearing part 7. The middle load-bearing part 7 is fitted with firm stator stampings 13 with coiling 16 and through ducts 14. The components of the rotary casing are mounted on the middle load-bearing part of the motor 7 with the help of bearings 11 so that the casing can rotate. The rear grip 17 is mounted on the middle load-bearing part 7. There is a propeller carrier 19 mounted on the front face 4 of the rotary casing.

When the electric motor is started and the rotary casing starts to rotate, negative pressure starts to develop and draw in air through the through ducts 14 and the connected cooling fluid passages 9 and then also from the cavity 8 and the cooling fluid input 6. This causes a continuous flow of the air through the inside of the electric motor from the middle load-bearing part 7, which is static, through the cooling fluid passages 9 and the connected ducts 14 inside the stator stampings 13 under the coiling 16 to the individual moving components of the rotary casing, spontaneously heated during the motor operation - which are now simultaneously cooled thanks to the induced flow of the cooling air. This system, too, is characterized by a high efficiency combined with relatively low manufacturing and operating costs. This design is suitable especially for electric motors with high rotor diameters. The through ducts 14 are both used for cooling and reduce the weight of stator stampings 13.

### Example 4 (not an embodiment of the claimed invention)

Fig. 4 shows the electric motor with output cooling ducts 5 on the individual components of the rotary casing - the magnet ring 1 containing magnets 2 and the rear face 3 - and inputs 6 for the cooling fluid (in this case air) in the middle load-bearing part of the electric motor 7 and the rear front 3. The components of the rotary casing are mounted on the middle load-bearing part of the motor 7 with the help of bearings 11 so that the casing can rotate.

When the electric motor is started and the rotary casing starts to rotate, negative pressure starts to develop in the output channels 5 in the vicinity of the ring 1 of magnets 2 and the rear face 3, drawing in air through cooling fluid inputs 6. This causes a continuous flow of the cooling fluid through the inside of the electric motor from the middle load-bearing part 7, which is static, to the individual static components inside the electric motor and the individual moving components of the rotary casing, spontaneously heated during the motor operation - which are now simultaneously cooled thanks to the induced flow of the cooling fluid. This again happens without with a high efficiency, the design involving all kinds of economic benefits. This design variant of the electric motor is suitable for applications in model aircraft where the electric motor has to be fitted onto the rear side of the motor wall.

### Industrial Applications

The rotary-casing electric motor which is the subject of this invention can be used both in model-making applications with propellers (both pull and push variants) as well as other - industrial - applications without a propeller, for instance with a belt pulley or to drive a certain system directly. The internal cooling of the electric motor which is the subject of this invention can also be used to its full advantage when the rotary-casing electric motor is run in the inverse - generator - mode.

## Claims

1. An electric motor for industrial and model-making applications having a rotary casing comprising front face, magnetic ring and rear face, wherein there is a system of output cooling ducts (5) in its rotary casing, namely in the magnet ring (1) between magnets (2), the said output cooling ducts (5) are passing through magnet ring (1), and wherein this electric motor also contains at least one cooling fluid input (6) in its middle load-bearing part (7) and that this middle load-bearing part (7) contains a cavity (8) and a cooling fluid passage (9) leading into the intermediate space (10) between the parts of the rotary casing and the static parts of the electric motor, and the rotary casing being fitted on the middle load-bearing part (7) using at least one bearing (11) so that the casing can rotate.

2. An electric motor according to claim 1, **characterized i n** that the said cavity (8) is split by an internal wall (12),

3. An electric motor according to claim 1, **characterized i n** that the block of stator stampings (13) contains a system of through ducts (14).

4. An electric motor according to claim 1, **characterized i n** that the through ducts (14) are connected with the cavity (8) by ducts (15) in the middle load-bearing part (7).

5. An electric motor according to claim 1, **characterized i n** that a block of stator stampings (13) containing the coiling (16) and at least one bearing (11) is fitted on the middle load-bearing part (7).

6. An electric motor according to claim 1, **characterized i n** that it contains a rear grip (17) and/or a front grip (18).

7. An electric motor according to claim 1, **characterized i n** that there is a propeller carrier (19) mounted onto the front face (4) of the motor.

## Patentansprüche

1. Ein Elektromotor für die Industrie und Modellbau-Anwendung mit eine Drehgehäuse, bestehende aus Vorderseite, Magnetring und Rückseite, **wobei** gibt es ein System von Ausgangskühlkanäle (5) in seiner Drehgehäuse, nämlich im Magnetring (1) zwischen den Magneten (2), wo die genannten Ausgangskühlkanäle (5) durch Magnetring (1) gehen, und wobei dieser Elektromotor auch mindestens einen Fluideingang Kühlung (6) enthält in seinem mittleren Tragenteil (7) und dass dieses mittlere Tragenteil (7) enthält einen Hohlraum (8) und einen Kühlfluiddurchgang (9) der führt in den Zwischenraum (10) zwischen den Teilen des Drehgehäuses und den statischen Teilen des Elektromotors und das Drehgehäuse auf dem mittleren Tragenteil (7) mittels mindestens eines Lager (11) so dass das Gehäuse drehen kann.

2. Elektromotor nach Anspruch 1, **dadurch gekennzeichnet, dass** der Hohlraum (8) durch eine Innenwand (12) aufgeteilt ist.

3. Elektromotor nach Anspruch 1, **dadurch gekennzeichnet, dass** der Block der Stator Stempeln (13) ein System von Durchkanale (14) enthält.

4. Elektromotor nach Anspruch 1 und 2, **dadurch gekennzeichnet, dass** die Durchkanale (14) mit dem Hohlraum (8) verbunden sind mittels der Kanäle (15) in dem mittleren Tragenteil (7).

5. Elektromotor nach Anspruch 1, **dadurch gekennzeichnet, dass** ein Block von Stator Stempeln (13), mit die Spule (16) und mindestens ein Lager (11), wird auf dem mittleren Tragenteil (7) abgelagert.

6. Elektromotor nach Anspruch 1, **dadurch gekennzeichnet, dass** es einen hinteren Griff (17) und / oder einen vorderen Griff (18) enthält.

7. Elektromotor nach Anspruch 1, **dadurch gekennzeichnet, dass** es einen Propeller Träger (19) auf der Vorderseite (4) des Motors montiert hat.

## Revendications

1. Un moteur éléctrique servant les applications industrielles et modélistes et unboîtier rotatif comprenant face avant, anneau magnétique et face arrière, le boîtier étant équippé d'un système de conduits de sortie de refroidissement (5) placés dans l'anneau magnétique (1) entre aimants (2) lesdits conduits de sortie de refroidissement (5) sont de passage par l'anneau magnétique (1), ce moteur électrique contient également au moins une entrée de fluide de refroidissement (6), dans sa partie médiane de charge (7) et que cette partie médiane de charge (7) contient une cavité (8) et un passage de fluide de refroidissement (9) débouchant dans l'espace intermédiaire (10) entre les parties du boîtier rotatif et les parties statiques du moteur électrique et le boîtier rotatif étant monté sur la partie médiane de charge (7) en utilisant au moins un palier (11) de sorte que le boîtier puisse tourner.

2. Ce moteur éléctrique défini dans la revendication 1, **caractérisé en ce que** ladite cavité (8) est divisée par une paroi interne (12).

3. Ce moteur éléctrique défini dans la revendication 1, **caractérisé en ce que** ce que le bloc d'estampage de stator (13) comprend un système de conduits traversants (14).

4. Ce moteur éléctrique défini dans la revendication 1 et 2, **caractérisé en ce que** les conduits traversants (14) sont reliées avec la cavité (8) par des conduits (15) dans la partie médiane de charge (7).

5. Ce moteur éléctrique défini dans la revendication 1, **caractérisé en ce que** le bloc d'estampage de stator (13) contenant le bobinage (16) et au moins un palier (11) est monté sur la partie médiane de charge (7).

6. Ce moteur éléctrique défini dans la revendication 1, **caractérisé en ce qu'**il contient une fixation à l'arrière (17) et / ou une fixation avant (18).

7. Ce moteur éléctrique défini dans la revendication 1, **caractérisé en ce qu'**il contient un porte-hélice (19) monté sur la face avant (4) du moteur.
